# EUROPEAN PATENT APPLICATION

(11) **EP 4 607 338 A1**
(43) Date of publication of application: **27.08.2025**
(21) Application number: 23881291.1
(22) Date of filing: 28.06.2023
(51) Int. Cl.: G06F 8/41

(54) **OPERATOR COMPILING METHOD AND APPARATUS**

(30) Priority: 27.10.2022 CN 202211325387
(71) Applicant: Huawei Technologies Co., Ltd., Shenzhen, Guangdong 518129 (CN)
(72) Inventor: QIAO, Hairong, Shenzhen, Guangdong 518129 (CN)
(74) Representative: Pfenning, Meinig & Partner mbB
(86) International application number: PCT/CN2023/103484
(87) International publication number: WO 2024/087702

(57) **Abstract**

This application provides an operator compilation method and apparatus. The method includes: A first device obtains a first executable file, and sends the first executable file to a second device, where the first executable file is a binary file obtained through compilation of a first operator. In addition, the first device obtains a model file, and sends the model file to the second device, where the model file is a binary file obtained through compilation of an AI model, and the model file includes execution logic of the first executable file. In this way, the first device configures an executable file of an operator to be outside the model file of the AI model, so that a size of the model file of the AI model can be effectively reduced, to help update and manage the operator and the AI model. This avoids a large amount of repeated compilation, reduces a waste of resources, and helps speed up execution of the AI model.

## Description

### CROSS-REFERENCE TO RELATED APPLICATION

This application claims priority to Chinese Patent Application No. 202211325387.9, filed with the China National Intellectual Property Administration on October 27, 2022 and entitled "OPERATOR COMPILATION METHOD AND APPARATUS", which is incorporated herein by reference in its entirety.

### TECHNICAL FIELD

This application relates to the field of artificial intelligence, and in particular, to an operator compilation method and apparatus.

### BACKGROUND

Artificial intelligence is a new technology science that researches and develops theories, methods, technologies, and application systems for simulating, extending, and expanding human intelligence, and was first proposed by John McCarthy in 1956. The purpose of the artificial intelligence is to enable machines to think like humans and to have intelligence. Nowadays, the connotation of the artificial intelligence has been greatly expanded. Based on deep reinforcement learning and big data, promoted by various factors, for example, the development of convolutional neural network models and parameter training skills, considerable computing capabilities provided by hardware computing capabilities that break through Moore's Law, and the Internet and massive big data sets, the artificial intelligence is applied to various fields including text classification (text classification), sequence labeling (sequence labeling), neural machine translation (neural machine translation), relation extraction (relation extraction), event extraction (event extraction), image classification (image classification), and visual reasoning (visual reasoning), semantic segmentation (semantic segmentation), and the like.

Developers or researchers may design different artificial intelligence (artificial intelligence, AI) models, for example, facial recognition models and voice recognition models. Before each execution of an AI model, the AI model and operators corresponding to the AI model need to be compiled to form an executable binary file. Because one AI model corresponds to a plurality of operators, a model file obtained through compilation of the AI model includes binary files of the plurality of operators. As a result, the model file is excessively large and occupies large memory space. In addition, when one of the operators is updated, the entire AI model and a plurality of other operators in the AI model need to be compiled, resulting in a large amount of repeated compilation and low compilation efficiency.

Therefore, how to reduce a size of the model file of the AI model, avoid repeated compilation, and reduce an unnecessary waste of resources is a technical problem that needs to be urgently resolved by a person skilled in the art.

### SUMMARY

This application provides an operator compilation method and apparatus, to reduce a size of a model file of an AI model, avoid repeated compilation, reduce an unnecessary waste of resources, and help speed up execution of the model.

According to a first aspect, this application provides an operator compilation method. The method includes: A first device obtains a first executable file, and sends the first executable file to a second device, where the first executable file is a binary file obtained through compilation of a first operator. The first device obtains a model file, and sends the model file to the second device, where the model file is a binary file obtained through compilation of an artificial intelligence AI model, and the model file includes execution logic of the first executable file.

The first device may be understood as a host device, and is configured to obtain and deploy the model file and the first executable file. The second device may be understood as a terminal device, and is configured to deploy and execute the model file and the first executable file. A process in which the first device communicates with the second device to exchange the model file and the first executable file may be understood as a process in which the model file and the first executable file are deployed.

In this embodiment of this application, the first operator may include one or more operators.

In the method, the first device separately deploys an executable file of an operator and the model file of the AI model in the second device. In this way, the first device configures the executable file of the operator to be outside the model file of the AI model, so that a size of the model file of the AI model can be effectively reduced, to help update and manage the operator and the AI model. This avoids a large amount of repeated compilation, reduces a waste of resources, and helps speed up execution of the AI model.

In a possible implementation, the first device receives a user instruction, where the user instruction indicates to put the first executable file into the model file. Correspondingly, that the first device obtains a model file includes: The first device puts the first executable file into the model file in response to the user instruction. In this implementation, a user may flexibly select whether to put the executable file (that is, the first executable file) corresponding to the first operator into the model file.

In a possible implementation, the first device receives a second operator input by the user, and obtains a second executable file, where the second executable file is a binary file obtained through compilation of the second operator. The first device puts the second executable file into the model file. It may be understood that the second operator is a user-defined operator, and the second operator may include one or more operators. In other words, the first device may receive a user-defined operator, obtain an executable file corresponding to the operator, and put the executable file into the model file. In this way, the user can customize the model file based on an actual requirement to meet a service requirement.

In a possible implementation, the first device may further receive first request information from the second device, where the first request information is used for requesting the first executable file. Before the first device (that is, the host device) deploys the first executable file to the second device (that is, the terminal device), the terminal device may actively request the first executable file from the host device. For example, when the model file is executed or when a cache of the second device does not store the first executable file, the second device may send the first request information to the second device.

In a possible implementation, the method further includes: The first device receives a service instruction from the second device, where the service instruction indicates a service parameter of the first operator. The first device updates the first executable file based on the service parameter of the first operator. In this way, the first device updates the executable file (that is, the first executable file) of the first operator based on the service parameter of the first operator, so that the executable file of the first operator matches a service parameter required by the user, to effectively improve performance of the first executable file, and enable a related service to be executed more quickly.

Further, in a possible implementation, after the first device updates the first executable file, the method further includes: The first device receives second request information from the second device, where the second request information is used for requesting an updated first executable file. The first device sends the updated first executable file to the second device. The second device may actively request the updated first executable file from the first device.

In another possible implementation, the method further includes: The first device periodically updates the first executable file, and sends an updated first executable file to the second device. In this way, the first device can periodically update the first executable file, and send the updated first executable file to the second device, so that the executable file of the first operator in the second device can be updated in a timely manner.

According to a second aspect, this application provides an operator compilation method. The method includes: A second device receives a first executable file from a first device, where the first executable file is a binary file through compilation of a first operator. The second device receives a model file from the first device, where the model file is a binary file obtained through compilation of an AI model.

In a possible implementation, the second device parses the model file to obtain execution logic of the first executable file. The second device executes the first executable file based on the execution logic of the first executable file.

In a possible implementation, before that a second device receives a first executable file from a first device, the method further includes: When a cache of the second device does not store the first executable file, the second device sends first request information to the first device, where the first request information is used for requesting the first executable file.

In a possible implementation, the second device may send a service instruction to the first device, where the service instruction indicates a service parameter of the first operator, and the service parameter of the first operator is used for updating the first executable file.

In a possible implementation, the method further includes: The second device sends second request information to the first device, where the second request information is used for requesting an updated first executable file. The second device receives the updated first executable file from the second device.

In a possible implementation, the method further includes: The second device periodically receives an updated first executable file from the first device.

According to a third aspect, this application provides an operator compilation apparatus. The apparatus may be used in a first device.

In an example, the apparatus includes:
a processing module, configured to obtain a first executable file, where the first executable file is a binary file obtained through compilation of a first operator; and
a communication module, configured to send the first executable file to a second device.

The processing module is further configured to obtain a model file, where the model file is a binary file obtained through compilation of an AI model, and the model file includes execution logic of the first executable file.

The communication module is further configured to send the model file to the second device.

In a possible implementation, the communication module is further configured to receive a user instruction, where the user instruction indicates to put the first executable file into the model file. The processing module is specifically configured to put the first executable file into the model file in response to the user instruction.

In a possible implementation, the communication module is further configured to receive a second operator input by a user. The processing module is further configured to obtain a second executable file, where the second executable file is a binary file obtained through compilation of the second operator. The processing module is specifically configured to put the second executable file into the model file.

In a possible implementation, the communication module is further configured to receive first request information from the second device, where the first request information is used for requesting the first executable file.

In a possible implementation, the communication module is further configured to receive a service instruction from the second device, where the service instruction indicates a service parameter of the first operator. The processing module is further configured to update the first executable file based on the service parameter of the first operator.

In a possible implementation, the communication module is further configured to receive second request information from the second device, where the second request information is used for requesting an updated first executable file. The communication module is further configured to send the updated first executable file to the second device.

In a possible implementation, the processing module is further configured to periodically update the first executable file. The communication module is further configured to send an updated first executable file to the second device.

According to a fourth aspect, this application provides another operator compilation apparatus. The apparatus may be used in a second device.

In an example, the apparatus includes:
a communication module, configured to receive a first executable file from a first device, where the first executable file is a binary file obtained through compilation of a first operator.

The communication module is further configured to receive a model file from the first device, where the model file is a binary file obtained through compilation of an AI model.

Further, the apparatus further includes a processing module. The processing module is configured to parse the model file to obtain execution logic of the first executable file. The processing module is further configured to execute the first executable file based on the execution logic of the first executable file.

In a possible implementation, the apparatus further includes a storage module. The communication module is further configured to: when the storage module does not store the first executable file, send first request information to the first device, where the first request information is used for requesting the first executable file.

In a possible implementation, the communication module is further configured to send a service instruction to the first device, where the service instruction indicates a service parameter of the first operator, and the service parameter of the first operator is used for updating the first executable file.

In a possible implementation, the communication module is further configured to send second request information to the first device, where the second request information is used for requesting an updated first executable file. The communication module is further configured to receive the updated first executable file from the second device.

In a possible implementation, the communication module is further configured to periodically receive an updated first executable file from the first device.

According to a fifth aspect, this application provides a computing apparatus. The computing apparatus includes a processor and a communication interface. The communication interface is configured to: receive a signal from a computing apparatus other than the computing apparatus and transmit the signal to the processor, or send a signal from the processor to a computing apparatus other than the computing apparatus. The processor is configured to implement, through a logic circuit or by executing code instructions, a method according to any one of the first aspect or the implementations of the first aspect or a method according to any one of the second aspect or the implementations of the second aspect.

According to a sixth aspect, a computing apparatus is provided and includes a processor and a memory. The memory is configured to store program code. The processor is configured to invoke the program code to perform a method according to any one of the first aspect or the implementations of the first aspect or a method according to any one of the second aspect or the implementations of the second aspect.

According to a seventh aspect, this application provides a computer-readable storage medium. The computer-readable storage medium stores a computer program or instructions. When the computer program or the instructions are executed by a computing apparatus, a method according to any one of the first aspect or the implementations of the first aspect or a method according to any one of the second aspect or the implementations of the second aspect is implemented.

According to an eighth aspect, this application provides a computer program product. The computer program product includes a computer program or instructions. When the computer program or the instructions are executed by a computing apparatus, a method according to any one of the first aspect or the implementations of the first aspect or a method according to any one of the second aspect or the implementations of the second aspect is implemented.

According to a ninth aspect, this application provides a computing system. The computing system includes a first device configured to perform a method according to any one of the first aspect or the implementations of the first aspect and a second device configured to perform a method according to any one of the second aspect or the implementations of the second aspect.

For technical effects that can be achieved in any one of the second aspect to the ninth aspect, refer to descriptions of beneficial effects in the first aspect. Details are not described herein again.

### BRIEF DESCRIPTION OF DRAWINGS

FIG. 1 is a diagram of a computational graph according to this application;
FIG. 2A is a first diagram of a system architecture related to model training and inference according to this application;
FIG. 2B is a second diagram of a system architecture related to model training and inference according to this application;
FIG. 3 is a diagram of a structure of a neural network acceleration engine according to this application;
FIG. 4 is a schematic flowchart of an operator compilation method in a scenario according to this application;
FIG. 5 is a first schematic flowchart of an operator compilation method according to this application;
FIG. 6 is a second schematic flowchart of an operator compilation method according to this application;
FIG. 7 is a third schematic flowchart of an operator compilation method according to this application;
FIG. 8 is a schematic flowchart of executing a model file by a second device according to an embodiment of this application;
FIG. 9 is a schematic flowchart of updating a first executable file according to an embodiment of this application;
FIG. 10 is a diagram of a structure of an operator compilation apparatus according to this application;
FIG. 11 is a diagram of a structure of another operator compilation apparatus according to this application; and
FIG. 12 is a diagram of a structure of a computing apparatus according to this application.

### DESCRIPTION OF EMBODIMENTS

To make objectives, technical solutions, and advantages of embodiments of this application clearer, the following further describes embodiments of this application in detail with reference to accompanying drawings. The terms "first" and "second" below in descriptions of embodiments of this application are merely used for description, and shall not be understood as an indicating or implying relative importance or implying a quantity of indicated technical features. Therefore, a feature limited by "first" or "second" may explicitly or implicitly include one or more features.

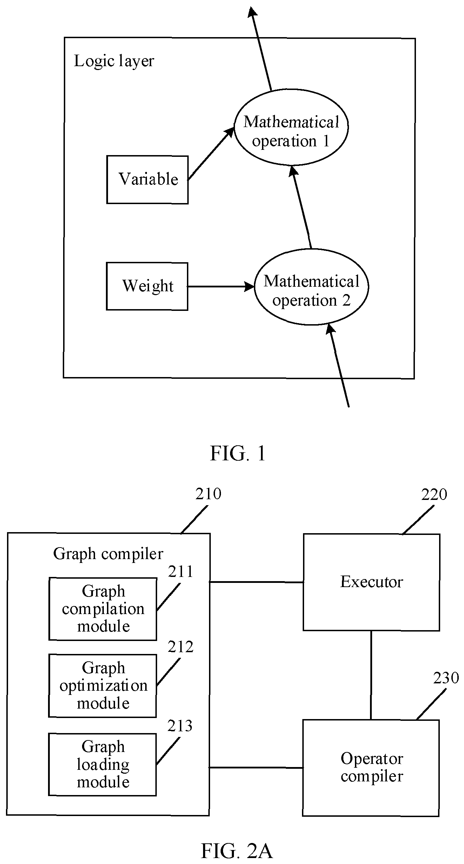

For ease of understanding, descriptions about concepts related to this application are provided as examples for reference.
(1) Computational graph (computational graph): One unique piece of computation logic may be determined by defining an AI model and solving a parameter of the model (which may be referred to as model training). The computation logic subjected to conversion processing may be applied to inference computation (which may also be referred to as model inference or use). The computation logic may be represented by a graph, and the graph is the computational graph.
   The computational graph is represented as a directed graph, which defines a data transfer mode, a data calculation mode, interdependencies between various computations, and the like. FIG. 1 is a computational graph according to this application. A computational graph of an AI model includes an operator (node) and an edge (edge). The operator represents an applied mathematical operation (operation), a start point of data input (feed in)/an end point of data output (push out), or an end point of reading/writing a persistent variable (persistent variable). The operator is a basic computing unit of the AI model. The edge represents an input/output relationship between operators. The edge may transmit a multi-dimensional data array whose size (size) can be dynamically adjusted, where the multi-dimensional data array whose size can be dynamically adjusted is a tensor (tensor). A data structure such as the tensor may represent data in a model. To be specific, one tensor may correspond to one n-dimensional array or list, where n is an integer greater than or equal to zero. The tensor has two attributes: dimension (shape) and rank (rank). In addition, tensors may flow between the operators of the computational graph.
(2) Compilation (compilation/compile): The compilation is a process of converting a program written in a programming language (source language) into a program using another language (target language). The source language may be a language used when a user writes a target program, and the target language may be a language used by an apparatus that the user expects to select to run the target program. For example, the compilation may convert a high-level language used for writing a source program into a binary language that can be identified by a machine (for example, a computer or an executor), so that the machine can identify and execute the program. In embodiments of this application, operator compilation and AI model compilation are provided.

It should be noted that in embodiments of this application, an operator may also be referred to as a node, a computing task, an operation (operation, OP), an operation layer, or the like. A data dimension may also be referred to as a dimension, a shape, or the like. In addition, the AI model in embodiments of this application may be a deep learning model, a neural network model, or the like.

It should be understood that in embodiments of this application, "at least one" means one or more, and "plurality of" means two or more. The term "and/or" describes an association relationship between associated objects, and indicates that three relationships may exist. For example, A and/or B may indicate the following three cases: Only A exists, both A and B exist, and only B exists. A and B may be singular or plural. The character "/" generally indicates an "or" relationship between the associated objects. "At least one of the following (items) pieces" or a similar expression thereof indicates any combination of these items, including a single item (piece) or any combination of a plurality of items (pieces). For example, at least one item (piece) of a, b, or c may indicate: a, b, c, a and b, a and c, b and c, or a, b and c, where a, b, and c may be singular or plural.

The following describes in detail embodiments of this application with reference to the accompanying drawings.

FIG. 2A is a first diagram of a system architecture related to model training and inference according to an example of this application. The system architecture may be used for compiling an AI model to obtain a corresponding model file. It should be understood that the model file is a binary file.

In FIG. 2A, the system architecture includes a graph compiler 210 (which may also be referred to as a model compiler), an executor 220, and an operator compiler 230. For example, the computational graph shown in FIG. 1 may be input into the graph compiler 210. Specifically, the graph compiler 210 includes a graph compilation module 211, a graph optimization module 212, and a graph loading module 213. The graph compilation module 211 converts the computational graph into an intermediate representation (intermediate representation, IR), to form a model file of an AI model. In addition, the graph optimization module 212 performs target-independent optimization on the intermediate representation, for example, computational graph fusion and sub-graph splitting, and then performs target-related optimization, for example, related optimization by using technologies such as single instruction multiple data stream (single instruction multiple data, SIMD), data tiling (tiling), data unrolling (unrolling), and vectorization (vectorization). The graph loading module 213 loads an optimized intermediate representation to the operator compiler 230. The operator compiler 230 generates a binary file that is executable in the executor 220 (that is, an executable file of an operator).

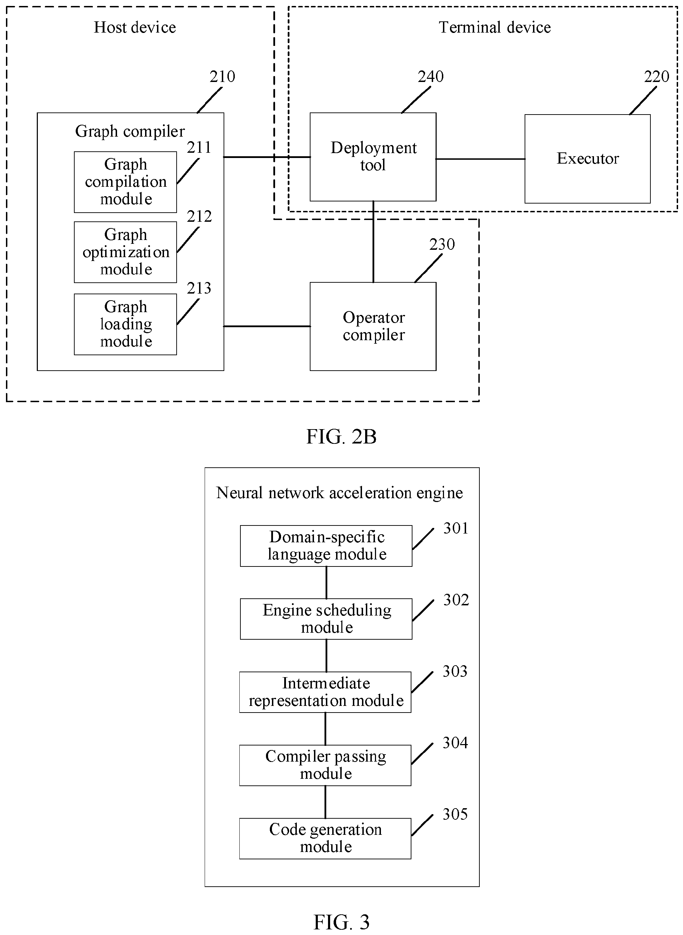

FIG. 2B is a second diagram of a system architecture related to model training and inference according to an example of this application. The architecture further includes a deployment tool 240. After the graph compiler 210 compiles the computational graph to obtain the model file of the AI model, the deployment tool 240 may install and deploy the model file. In addition, after the operator compiler 230 compiles the operator to obtain the executable file of the operator, the deployment tool 240 may install and deploy the executable file of the operator.

It should be understood that the model training and inference is applicable to various computing frameworks. Using a computing framework MindSpore as an example, a developer constructs a neural network model by using MindSpore, and performs parameter solving on the neural network model, to obtain a trained MindSpore model after the parameter solving. The trained MindSpore model is used in model inference. Specific use of a computational graph varies in different computing frameworks. In a computational graph corresponding to MindSpore, a node used for describing a computing process may be referred to as an operator. In other words, in MindSpore, a series of operators, parameters of the operators, and computation logic may be described as a computational graph. The computational graph may be represented by a static graph or a dynamic graph. For example, MindSpore may represent the entire computing process by using a static graph. In the entire neural network construction of MindSpore, the operators form network structures of different application functions, and a neural network acceleration engine may provide an operator development capability. The developer may write corresponding operators to construct various neural network models, and use code written by using the neural network acceleration engine as input of the operator compiler 230 in FIG. 2A or FIG. 2B.

For example, a structure of the neural network acceleration engine is shown in FIG. 3, and includes a domain-specific language (domain-specific language, DSL) module 301, an engine scheduling (schedule) module 302, an intermediate representation module 303, a compiler passing (pass) module 304, and a code generation (codegen) module 305. Specifically, the domain-specific language module 301 is configured to provide a writing interface for computation logic of an operator, and a developer may write a computing process and a scheduling process of the operator by using the writing interface. The engine scheduling module 302 is configured to divide data in the operator based on a scheduling description, specify a data transfer procedure, and provide an operator fusion and optimization capability. The intermediate representation module 303 is configured to generate an intermediate representation. After the operator is processed by the compiler passing module 304, the code generation module 305 generates a temporary file of C-like code. The temporary file is input into the operator compiler 230, so that the operator compiler 230 can generate an executable file of the operator.

It should be understood that the computing framework serializes the computational graph to obtain a file, and the file is parsed, compiled, and executed by the computing framework. Specifically, the file may be parsed and compiled by a host device in the computing framework to obtain the binary file (that is, the model file), and the model file is executed by a terminal device in the computing framework. For example, the host device may include the graph compiler 210 and the operator compiler 230 shown in FIG. 2B, and the terminal device may include the deployment tool 240 and the executor 220 in FIG. 2B. The host device may also be referred to as a primary device, a host side, or a host end, and the terminal device may also be referred to as a secondary device, a device side, a chip side, a chip device, or a device end. The binary file may be understood as a file executed on the device side, and the binary file may also be referred to as a machine-executable file, a machine code file, or the like. For example, the host device may be a central processing unit (central processing unit, CPU), and the terminal device may be a graphics processing unit (graphics processing unit, GPU). One CPU may be connected to at least one GPU. The CPU is connected to the at least one GPU through a peripheral component interconnect express (peripheral component interconnect express, PCIe) interface. The CPU parses and compiles a neural network model to obtain a model file (an executable binary file), and sends the model file to the at least one GPU through the PCIe interface.

The compilation may also be referred to as graph compilation, and the graph compilation may include dynamic compilation and static compilation. Specifically, the dynamic compilation may also be referred to as online compilation, and means that the host device compiles an AI model in a program execution (model inference) process, to obtain a model file run on the terminal device. The static compilation may also be referred to as offline compilation (ahead of time, AOT), and means that the host device compiles an AI model before a program is executed, to obtain a model file run on the terminal device, and then invokes a corresponding binary file when the program is run. To reduce time consumption in the model inference process, static compilation may be generally used for the graph compilation. To be specific, before the program execution, the host device compiles the AI model into a model file based on performance of the terminal device, and then delivers the model file to the terminal device, to avoid interaction between the host device and the terminal device. In a plurality of program execution processes, the host device needs to compile the AI model for each program execution, and send a model file obtained through compilation to the terminal device. For example, in a facial recognition process, each time a picture is input, a recognition model needs to be invoked to recognize a face in a current picture. To be specific, for each picture, the host device needs to compile a model file corresponding to the recognition model with reference to a current picture to obtain a binary file executed in the terminal device this time, and send the binary file to the terminal device. The terminal device executes the binary file to obtain an execution result of face recognition. Alternatively, in a process of repeatedly invoking a single operator, the host device needs to compile the single operator for each invoking, and send a binary file obtained through compilation to the terminal device. For example, brightness of an image is adjusted by executing a single operator. To be specific, each time an image is input, the single operator needs to be compiled with reference to a current image, to obtain a binary file executed in the terminal device this time, and the binary file is sent to the terminal device. The terminal device executes the binary file, to obtain an image obtained through brightness adjustment.

It can be learned from the above that one AI model corresponds to a plurality of operators, a model file obtained through compilation of the AI model includes binary files of the plurality of operators. As a result, the model file is excessively large and occupies large memory space. In addition, when one of the operators is updated, the host device needs to compile the entire AI model and a plurality of other operators in the AI model, resulting in a large amount of repeated compilation and low compilation efficiency.

In view of this, this application provides an operator compilation method, to reduce a size of a model file of an AI model, avoid repeated compilation, reduce an unnecessary waste of resources, and help speed up execution of the model. Because the host device may not compile an operator in the AI model when compiling the AI model, if the AI model is not recompiled, the host device may independently update an executable file of the operator.

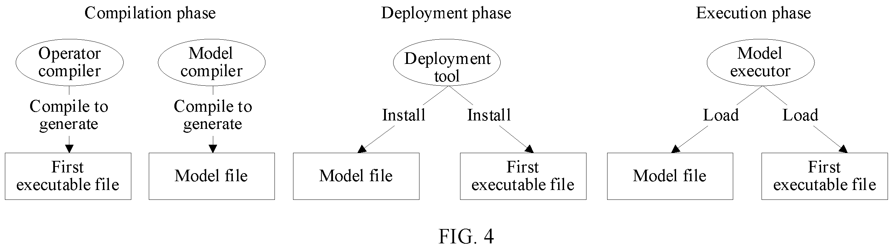

As shown in FIG. 4, specific implementations of the operator compilation method provided in this embodiment of this application include a compilation phase, a deployment phase, and an execution phase. The compilation phase is implemented by a host device. Specifically, an operator compiler in the host device may compile operators in an AI model to obtain first executable files of the operators, and an operator compiler (that is, a graph compiler) in the host device compiles the AI model to obtain a model executable file of the AI model. The deployment phase may be implemented by the host device and the terminal device. Specifically, the terminal device receives the model file and the first executable file that are from the host device, and then a deployment tool in the terminal device separately stores the model file and the first executable file in the terminal device. The execution phase may be implemented by the terminal device. Specifically, a model executor in the terminal device may load the model file and the first executable file, and parse and execute the model file and the first executable file.

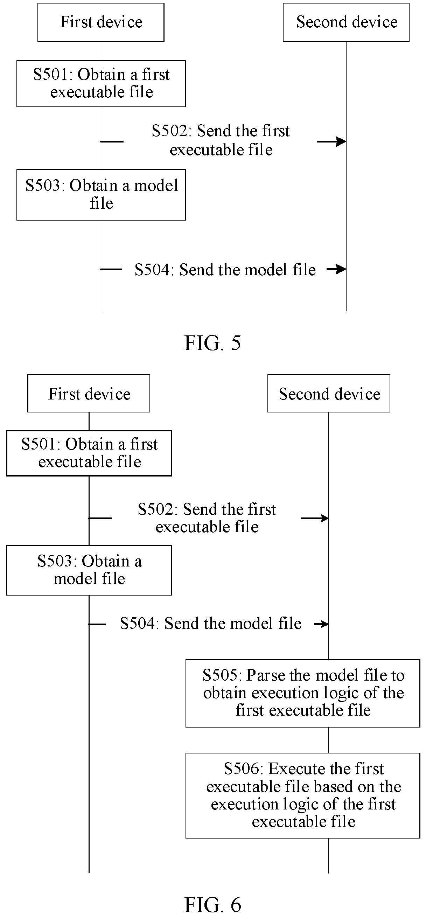

The following first further describes the operator compilation method provided in embodiments of this application from perspectives of the host device and the terminal device. For example, FIG. 5 is a schematic flowchart of an operator compilation method according to an embodiment of this application. In FIG. 5, the host device is referred to as a first device, and the terminal device is referred to as a second device. A process includes the following steps:
S501: The first device obtains a first executable file, where the first executable file is a binary file obtained through compilation of a first operator.

In this embodiment of this application, the first operator may include one or more operators. This is not limited in embodiments of this application. The first operator may include operator source code and an operator input parameter. The operator input parameter may include one or more of a weight, a variable, a constant (fixed value), and a character string. The weight may be understood as a weight space size or a shape of a tensor.

That the first device obtains a first executable file includes but is not limited to the following cases:
Case 1: The first device has an operator compilation function. The first device may obtain the first operator, and compile the first operator to obtain the first executable file.

Case 2: The first device does not have an operator compilation function. The first device may request the first executable file from another device that has an operator compilation function.

S502: The first device sends the first executable file to the second device. Correspondingly, the second device receives the first executable file.

In S502, a process in which the first device sends the first executable file to the second device may be understood as a part of a process of deploying the first executable file. Correspondingly, a process in which the second device stores the first executable file after receiving the first executable file may be understood as another part of the process of deploying the first executable file. For example, the second device may store the first executable file into a chip of the second device.

Optionally, before the second device receives the first executable file from the first device, when determining that the first executable file is not stored in a cache of the second device, the second device sends first request information to the first device, where the first request information is used for requesting the first executable file. Then, when the first request information is received, the first device may perform S502, to be specific, send the first executable file to the second device.

S503: The first device obtains a model file, where the model file is a binary file obtained through compilation of an AI model, and the model file includes execution logic of the first executable file.

In this embodiment of this application, the "execution logic of the first executable file" may be understood as computation logic or running logic of the first operator corresponding to the first executable file.

That the first device obtains a first executable file includes but is not limited to the following cases:
Case 1: The first device has a model compilation function. The first device may obtain a source file corresponding to the AI model, and compile the source file corresponding to the AI model to obtain the model file.

Case 2: The first device does not have a model compilation function. The first device may request the model file of the AI model from another device that has a model compilation function.

S504: The first device sends the model file to the second device. Correspondingly, the second device receives the model file.

In S504, a process in which the first device sends the model file to the second device may be understood as a part of a process of deploying the model file. Correspondingly, a process in which the second device stores the model file after receiving the model file may be understood as another part of the process of deploying the model file. For example, the second device may deploy the model file to an application layer.

It may be understood that a sequence of S504 and S502 is not limited in this embodiment of this application. In other words, a sequence of sending the model file and sending the first executable file by the first device to the second device is not limited.

In the operator compilation method shown in FIG. 5, the first device separately deploys the executable file of the first operator and the model file of the AI model in the terminal device, so that a size of the model file of the AI model can be effectively reduced, to help update and manage the operator and the AI model. This avoids repeated compilation, reduces a waste of resources, and helps speed up execution of the AI model.

It can be learned from the foregoing descriptions that the deployment processes related to the model file and the first executable file are mainly described in FIG. 5. With reference to FIG. 6, the following describes a process in which the second device executes the model file and the first executable file. As shown in FIG. 6, the operator compilation method provided in this embodiment of this application further includes the following steps:
S505: The second device parses the model file to obtain the execution logic of the first executable file.

S506: The second device executes the first executable file based on the execution logic of the first executable file.

For example, the model file is a model file corresponding to a face box detection model. A first operator in the face box detection model is an operator for convolution operation, and the first executable file may be a binary file obtained through compilation of an operator for the convolution operation. Correspondingly, the execution logic of the first executable file is computation logic of the convolution operation.

In this way, the model file includes only the execution logic of the first executable file, but does not include the first executable file. This can effectively reduce a size of the model file, and reduce memory space occupied by the model file.

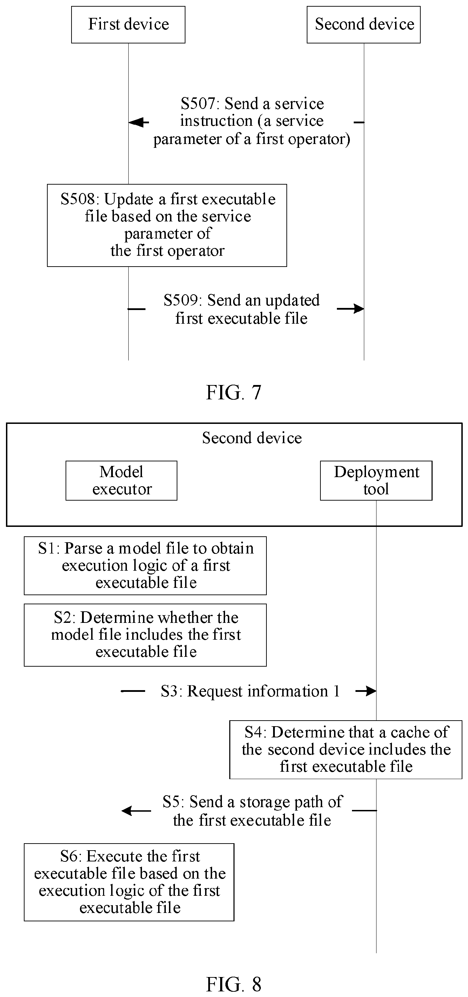

In this embodiment of this application, the first device may update the first executable file, so that the first executable file matches a current service of the model file, to improve performance of the first executable file. For example, that the first device may update the first executable file may be understood as that the first device recompiles the first operator to obtain an updated first executable file. For example, refer to FIG. 7. The method further includes the following steps:
S507: The second device sends a service instruction to the first device, where the service instruction indicates a service parameter of the first operator, and the service parameter of the first operator is used for updating the first executable file. Correspondingly, the first device receives the service instruction.

S508: The first device updates the first executable file based on the service parameter of the first operator.

Optionally, the service instruction may be determined by the second device based on user input, or may be obtained through analysis of historical information of a current service by the second device.

In Example 1, the current service is a facial recognition service. A first operator in a facial recognition model is an operator corresponding to a convolution operation. User input information received by the second device indicates that a user needs to perform facial recognition on an image whose shape is 64×64 and whose value (value) is value 11. In this case, the second device generates a corresponding service instruction based on the user input information, and the service instruction indicates that a service parameter related to the operator for the convolution operation is associated with the shape and the value (value) of the tensor being respectively 64×64 and value 11. Then, the first device updates the first executable file based on the service parameter. In this way, the first executable file of the first operator may be flexibly updated based on a service requirement of the user, so that an updated first executable file can better meet a service requirement of a current service, to effectively improve execution efficiency of the current service.

In Example 2, the current service is a facial recognition service. A first operator in a facial recognition model is an operator corresponding to a convolution operation. The second device analyzes historical input information of the facial recognition service and finds that there is a probability of 90% that shape and value (value) of a tensor corresponding to a picture input by a user in the facial recognition model are respectively 64×64 and value 11. A service instruction generated by the second device indicates that a service parameter related to the operator for the convolution operation is associated with the shape and the value (value) of the tensor being respectively 64×64 and value11. Then, the first device updates the first executable file based on the service parameter. In this way, the first device may automatically update the first executable file of the first operator with reference to a parameter obtained through analysis by the second device, so that an updated first executable file can better meet a service requirement of the current service, to effectively improve execution efficiency of the current service, and effectively improves user experience because no user operation is needed.

S509: The first device sends an updated first executable file to the second device. Correspondingly, the second device receives the updated first executable file.

It may be understood that the first device may perform S509 after performing S508. In other words, the first device may actively send the updated first executable file to the second device.

Optionally, before the updated first executable file is received, the second device may further send second request information to the first device, where the second request information is used for requesting the updated first executable file. Correspondingly, the first device receives the second request information, and sends the updated first executable file to the second device in response to the second request information. In this way, the second device may actively request the updated first executable file from the first device.

In some possible embodiments, the first device periodically updates the first executable file, and periodically sends the updated first executable file to the second device. Correspondingly, the second device periodically receives the updated first executable file from the first device. A periodicity for updating the first executable file by the first device may be one day, one week, one month, or the like, and a periodicity for receiving the updated first executable file by the second device may be one day, one week, one month, or the like. This is not limited in embodiments of this application.

In some scenarios, the user still needs to put the operator into the model file to improve integration of the model file. To provide the user with some flexibility in choice, in a possible implementation, the first device may further receive a user instruction. If the user instruction indicates to put the first executable file into the model file, the first device may put the first executable file into the model file in response to the user instruction. In this way, the user may flexibly select whether to put the executable file (that is, the first executable file) corresponding to the operator into the model file.

In a possible embodiment, the first device may further receive a second operator input by the user, and obtains a second executable file, where the second executable file is a binary file obtained through compilation of the second operator. In addition, the first device may further put the second executable file into the model file. The second operator may be understood as a user-defined operator, and the second operator may include one or more operators. In this way, the user can customize an operator of the AI model based on the service requirement, and integrate an executable file corresponding to the user-defined operator into the model file of the AI model, so that the AI model is more suitable for the service requirement of the user, to effectively improve performance of the model file of the AI model. For example, the second operator may be an operator for, for example, a reduction operation (that is, summing up elements in a row direction of a 3×3 matrix to obtain a third-order vector with all elements being 6) and a broadcast operation (that is, broadcasting the third-order vector back to an original dimension (shape), to obtain a 3×3 matrix with all elements being 6).

That the first device obtains the second executable file includes but is not limited to the following cases:
Case 1: The first device has an operator compilation function. After receiving the second operator input by the user, the first device compiles the second operator to obtain the second executable file.

Case 2: The first device does not have an operator compilation function. After receiving the second operator input by the user, the first device sends the second operator to another device that has an operator compilation function. The another device compiles the second operator to obtain the second executable file, and sends the second executable file to the first device. Correspondingly, the first device receives the second executable file.

The foregoing describes the operator compilation method provided in embodiments of this application from the perspectives of the first device and the second device. The following further describes, from a perspective of each component in the second device, a process in which the second device executes the model file and the first executable file. For example, refer to FIG. 8. In FIG. 8, the second device includes a model executor and a deployment tool. The process includes the following steps:
S1: The model executor parses the model file to obtain execution logic of the first executable file.

S2: The model executor determines whether the model file includes the first executable file.

It should be understood that when determining that the model file does not include the first executable file, the model executor performs S3 to send request information 1 to the deployment tool.

S3: The model executor sends the request information 1 to the deployment tool, where the request information 1 is used for requesting the first executable file. Correspondingly, the deployment tool receives the request information 1.

S4: The deployment tool determines that the cache of the second device includes the first executable file.

It should be understood that, after the request information 1 is received, if determining that the cache of the second device includes the first executable file, the deployment tool performs S5. After the deployment tool receives the request information 1, if determining that the cache of the second device does not include the first executable file, the deployment tool may request the first executable file from the first device (for example, a server).

S5: The deployment tool sends a storage path of the first executable file to the model executor. Correspondingly, the model executor receives the storage path of the first executable file.

Correspondingly, after receiving the storage path of the first executable file, the model executor may load the first executable file and perform S6.

S6: The model executor executes the first executable file based on the execution logic of the first executable file.

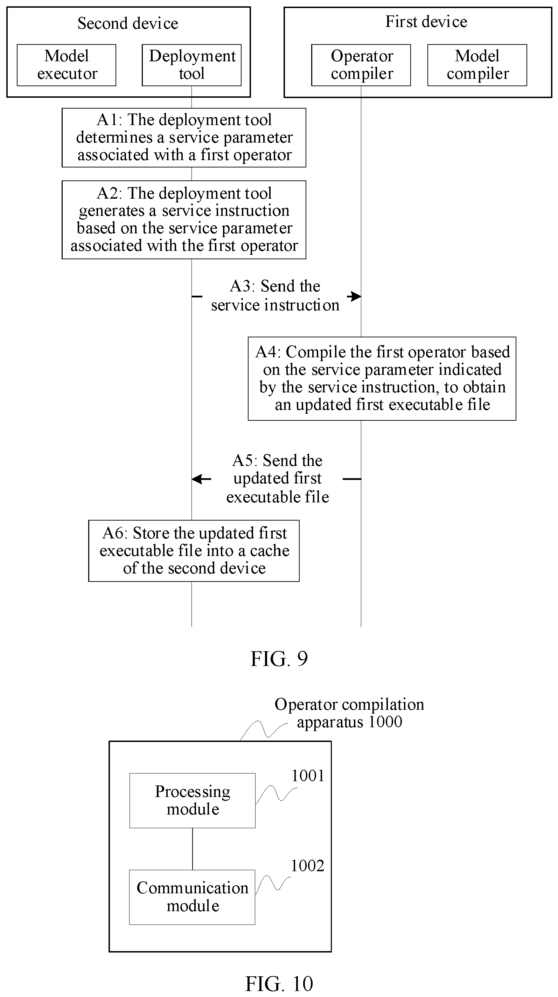

The following further describes a process in which the first device updates the first executable file from a perspective of components in the first device and the second device. For example, refer to FIG. 9. In FIG. 9, the second device includes a model executor and a deployment tool, and the first device includes an operator compiler and a model compiler. The process includes the following steps:
A1: The deployment tool determines a service parameter associated with a first operator.

For example, the service parameter associated with the first operator may be a hotspot operator and a hotspot tensor, that is, an operator that is frequently used in a current service and a tensor corresponding to the operator.

A2: The deployment tool generates a service instruction based on the service parameter associated with the first operator, where the service instruction is used for updating the first executable file corresponding to the first operator, and the service instruction indicates the service parameter associated with the first operator.

A3: The deployment tool sends the service instruction to the operator compiler. Correspondingly, the operator compiler receives the service instruction.

A4: The operator compiler compiles the first operator based on the service parameter indicated by the service instruction, to obtain an updated first executable file.

A5: The operator compiler sends the updated first executable file to the deployment tool. Correspondingly, the deployment tool receives the updated first executable file.

A6: The deployment tool stores the updated first executable file into the cache of the second device.

For ease of understanding, the following further describes the operator compilation method provided in embodiments of this application with reference to specific examples.

For example, an AI model is a face box detection model. An operator corresponding to the face box detection model is an operator for a convolution operation and is a local binary pattern (Local Binary Pattern, LBP) operation. The convolution operation is used for image data, and the LBP is used for describing local features of an image. When receiving a compilation instruction of a user, the first device may compile a source file of the face box detection model, generate a model file of the face box detection model, and send the model file to the second device, so that the model file is deployed in the second device. In addition, the first device compiles the convolution operation and the LBP to obtain a corresponding first executable file, and sends the first executable file to the second device, so that the first executable file is deployed in the second device. In this way, an executable file of an operator is configured to be outside the model file, so that a size of the model file can be effectively reduced. Therefore, when the executable file of the operator is updated, the AI model does not need to be repeatedly compiled.

Embodiments described in this specification may be independent solutions, or may be combined based on internal logic. All of these solutions fall within the protection scope of this application.

It may be understood that in the foregoing method embodiment, methods and operations implemented by the first device may alternatively be implemented by a component (for example, a chip or a circuit) that may be used in the first device, and methods and operations implemented by the second device may alternatively be implemented by a component (for example, a chip or a circuit) that may be used in the second device.

In the foregoing embodiments provided in this application, the method provided in embodiments of this application is described from a perspective of interaction between devices. To implement functions in the foregoing method provided in embodiments of this application, the first device or the second device may include a hardware structure and/or a software module, and implement the foregoing functions by the hardware structure, the software module, or a combination of the hardware structure and the software module. Whether a function in the foregoing functions is performed by the hardware structure, the software module, or the combination of the hardware structure and the software module depends on particular applications and design constraints of the technical solutions.

In embodiments of this application, module division is an example, and is merely a logical function division. In actual implementation, another division manner may be used. In addition, functional modules in embodiments of this application may be integrated into one processor, or may exist alone physically, or two or more modules may be integrated into one module. The integrated module may be implemented in a form of hardware, or may be implemented in a form of a software functional module.

Based on the foregoing content and the same concept, FIG. 10 is a diagram of a structure of a possible operator compilation apparatus according to this application. The operator compilation apparatus may be configured to implement a function of the first device in the foregoing method embodiment. Therefore, beneficial effects of the foregoing method embodiment can also be achieved. The operator compilation apparatus may be used in the first device described above.

For example, as shown in FIG. 10, the operator compilation apparatus 1000 may include:
a processing module 1001, configured to obtain a first executable file, where the first executable file is a binary file obtained through compilation of a first operator; and
a communication module 1002, configured to send the first executable file to a second device.

The processing module 1001 is further configured to obtain a model file, where the model file is a binary file obtained through compilation of an AI model, and the model file includes execution logic of the first executable file.

The communication module 1002 is further configured to send the model file to the second device.

In a possible implementation, the communication module 1002 is further configured to receive a user instruction, where the user instruction indicates to put the first executable file into the model file. The processing module 1001 is specifically configured to put the first executable file into the model file in response to the user instruction.

In a possible implementation, the communication module 1002 is further configured to receive a second operator input by a user. The processing module 1001 is further configured to obtain a second executable file, where the second executable file is a binary file obtained through compilation of the second operator. The processing module 1001 is specifically configured to put the second executable file into the model file.

In a possible implementation, the communication module 1002 is further configured to receive first request information from the second device, where the first request information is used for requesting the first executable file.

In a possible implementation, the communication module 1002 is further configured to receive a service instruction from the second device, where the service instruction indicates a service parameter of the first operator. The processing module 1001 is further configured to update the first executable file based on the service parameter of the first operator.

In a possible implementation, the communication module 1002 is further configured to receive second request information from the second device, where the second request information is used for requesting an updated first executable file. The communication module 1002 is further configured to send the updated first executable file to the second device.

In a possible implementation, the processing module 1001 is further configured to periodically update the first executable file. The communication module 1002 is further configured to send an updated first executable file to the second device.

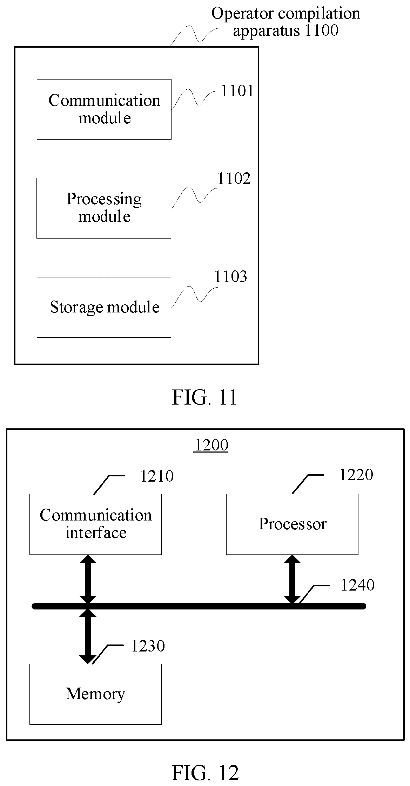

Based on the foregoing content and the same concept, FIG. 11 is a diagram of a structure of a possible operator compilation apparatus according to this application. The operator compilation apparatus may be configured to implement a function of the second device in the foregoing method embodiment. Therefore, beneficial effects of the foregoing method embodiment can also be achieved.

For example, as shown in FIG. 11, the operator compilation apparatus 1100 includes:
a communication module 1101, configured to receive a first executable file from a first device, where the first executable file is a binary file obtained through compilation of a first operator.

The communication module 1101 is further configured to receive a model file from the first device, where the model file is a binary file obtained through compilation of an AI model.

Further, the apparatus further includes a processing module 1102 configured to parse the model file to obtain execution logic of the first executable file. The processing module 1102 is further configured to execute the first executable file based on the execution logic of the first executable file.

In a possible implementation, the apparatus further includes a storage module 1103. The communication module 1101 is further configured to: when the storage module 1103 does not store the first executable file, send first request information to the first device, where the first request information is used for requesting the first executable file.

In a possible implementation, the communication module 1101 is further configured to send a service instruction to the first device, where the service instruction indicates a service parameter of the first operator, and the service parameter of the first operator is used for updating the first executable file.

In a possible implementation, the communication module 1101 is further configured to send second request information to the first device, where the second request information is used for requesting an updated first executable file. The communication module 1101 is further configured to receive the updated first executable file from the second device.

In a possible implementation, the communication module 1101 is further configured to periodically receive an updated first executable file from the first device.

FIG. 12 shows an apparatus according to an embodiment of this application. The apparatus shown in FIG. 12 may be an implementation of a hardware circuit of the apparatus shown in FIG. 10. The apparatus is applicable to performing a function of the first device in the foregoing method embodiment.

Alternatively, the apparatus shown in FIG. 12 may be an implementation of a hardware circuit of the apparatus shown in FIG. 11. The apparatus is applicable to performing a function of the second device in the foregoing method embodiment.

For ease of description, FIG. 12 shows only main components of the apparatus. The apparatus 1200 shown in FIG. 12 includes at least one processor 1220 configured to implement any method in FIG. 4 or FIG. 5 provided in embodiments of this application.

The apparatus 1200 may further include at least one memory 1230 configured to store program instructions and/or data. The memory 1230 is coupled to the processor 1220. The coupling in this embodiment of this application may be an indirect coupling or a communication connection between apparatuses, units, or modules in an electrical form, a mechanical form, or another form, and is used for information exchange between the apparatuses, the units, or the modules. The processor 1220 may cooperate with the memory 1230. The processor 1220 may execute the program instructions stored in the memory 1230. At least one of the at least one memory may be included in the processor.

In an implementation process, steps in the foregoing methods may be completed by a hardware integrated logic circuit in the processor or instructions in a form of software. The steps of the method disclosed with reference to embodiments of this application may be directly performed and completed by a hardware processor, or may be performed and completed by a combination of hardware and software modules in the processor. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware thereof. To avoid repetition, details are not described herein again.

It should be noted that the processor in embodiments of this application may be an integrated circuit chip, and has a signal processing capability. In an implementation process, the steps in the foregoing method embodiments may be completed by a hardware integrated logic circuit in the processor or instructions in a form of software. The processor may be a general-purpose processor, a digital signal processing processor (digital signal processor, DSP), an application specific integrated circuit (application specific integrated circuit, ASIC), a field programmable gate array (field programmable gate array, FPGA) or another programmable logic device, a discrete gate or a transistor logic device, or a discrete hardware component, and may implement or perform the methods, the steps, and logical block diagrams that are disclosed in embodiments of this application. The general-purpose processor may be a microprocessor, or the processor may be any conventional processor or the like. The steps of the method disclosed with reference to embodiments of this application may be directly performed and completed by a hardware decoding processor, or may be performed and completed by a combination of hardware and software modules in the decoding processor. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware thereof.

It may be understood that the memory in this embodiment of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. By way of example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and the methods described in this specification includes but is not limited to these memories and any other suitable types of memories.

The apparatus 1200 may further include a communication interface 1210 configured to communicate with another device through a transmission medium, so that an apparatus in the apparatus 1200 can communicate with the another device. In this embodiment of this application, the communication interface may be a transceiver, a circuit, a bus, a module, or another type of communication interface. In this embodiment of this application, when the communication interface is a transceiver, the transceiver may include an independent receiver and an independent transmitter. Alternatively, the communication interface may be a transceiver integrating a transceiver function, or an interface circuit.

The apparatus 1200 may further include a communication line 1240. The communication interface 1210, the processor 1220, and the memory 1230 may be connected to each other through the communication line 1240. The communication line 1240 may be a peripheral component interconnect (peripheral component interconnect, PCI for short) bus, an extended industry standard architecture (extended industry standard architecture, EISA for short) bus, or the like. The communication line 1240 may include an address bus, a data bus, a control bus, or the like. For ease of representation, only one bold line is used for representation in FIG. 12, but this does not mean that there is only one bus or only one type of bus.

According to the method provided in embodiments of this application, this application further provides a computer program product. The computer program product includes computer program code. When the computer program code is run on a computer, the computer is enabled to perform the method in any one of the foregoing embodiments.

According to the method provided in embodiments of this application, this application further provides a computer-readable medium. The computer-readable medium stores program code. When the program code is run on a computer, the computer is enabled to perform the method in any one of the foregoing embodiments.

According to the method provided in embodiments of this application, this application further provides a system. The system includes the foregoing first device and the foregoing second device.

A person skilled in the art should understand that embodiments of this application may be provided as a method, a system, or a computer program product. Therefore, this application may use a form of hardware-only embodiments, software-only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or the block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that an apparatus configured to implement functions specified in one or more procedures in the flowcharts and/or one or more blocks in the block diagrams is generated by using instructions executed by the computer or the processor of another programmable data processing device.

These computer program instructions may be stored in a computer-readable memory that can instruct a computer or another programmable data processing device to work in a specific manner, so that instructions stored in the computer-readable memory generate an artifact that includes an instruction apparatus. The instruction apparatus implements a specific function in one or more procedures in the flowcharts and/or in one or more blocks in the block diagrams.

It is clear that a person skilled in the art can make various modifications and variations to this application without departing from the scope of this application. In this case, this application is intended to cover these modifications and variations of this application provided that they fall within the scope of protection defined by the following claims and their equivalent technologies.

## Claims

1. An operator compilation method, comprising:
obtaining, by a first device, a first executable file, wherein the first executable file is a binary file obtained through compilation of a first operator;
sending, by the first device, the first executable file to a second device;
obtaining, by the first device, a model file, wherein the model file is a binary file obtained through compilation of an artificial intelligence AI model, and the model file comprises execution logic of the first executable file; and
sending, by the first device, the model file to the second device.

2. The method according to claim 1, wherein the method further comprises:
receiving, by the first device, a user instruction, wherein the user instruction indicates to put the first executable file into the model file; and
the obtaining, by the first device, a model file comprises: putting, by the first device, the first executable file into the model file in response to the user instruction.

3. The method according to claim 1 or 2, wherein the method further comprises:
receiving, by the first device, a second operator input by a user, and obtaining a second executable file, wherein the second executable file is a binary file obtained through compilation of the second operator; and
putting, by the first device, the second executable file into the model file.

4. The method according to any one of claims 1 to 3, wherein the method further comprises:
receiving, by the first device, first request information from the second device, wherein the first request information is used for requesting the first executable file.

5. The method according to any one of claims 1 to 4, wherein the method further comprises:
receiving, by the first device, a service instruction from the second device, wherein the service instruction indicates a service parameter of the first operator; and
updating, by the first device, the first executable file based on the service parameter of the first operator.

6. The method according to any one of claims 1 to 5, wherein the method further comprises:
receiving, by the first device, second request information from the second device, wherein the second request information is used for requesting an updated first executable file; and
sending, by the first device, the updated first executable file to the second device.

7. The method according to any one of claims 1 to 5, wherein the method further comprises:
periodically updating, by the first device, the first executable file, and sending an updated first executable file to the second device.

8. An operator compilation method, comprising:
receiving, by a second device, a first executable file from a first device, wherein the first executable file is a binary file obtained through compilation of a first operator; and
receiving, by the second device, a model file from the first device, wherein the model file is a binary file obtained through compilation of an AI model.

9. The method according to claim 8, wherein the method further comprises:
parsing, by the second device, the model file to obtain execution logic of the first executable file; and
executing, by the second device, the first executable file based on the execution logic of the first executable file.

10. The method according to claim 8 or 9, wherein before the receiving, by a second device, a first executable file from a first device, the method further comprises:
when determining that a cache of the second device does not store the first executable file, sending, by the second device, first request information to the first device, wherein the first request information is used for requesting the first executable file.

11. The method according to any one of claims 8 to 10, wherein the method further comprises:
sending, by the second device, a service instruction to the first device, wherein the service instruction indicates a service parameter of the first operator, and the service parameter of the first operator is used for updating the first executable file.

12. The method according to any one of claims 8 to 11, wherein the method further comprises:
sending, by the second device, second request information to the first device, wherein the second request information is used for requesting an updated first executable file; and
receiving, by the second device, the updated first executable file from the device.

13. The method according to any one of claims 8 to 11, wherein the method further comprises:
periodically receiving, by the second device, an updated first executable file from the first device.

14. An operator compilation apparatus, wherein the operator compilation apparatus is used in a first device and comprises:
a processing module, configured to obtain a first executable file, wherein the first executable file is a binary file obtained through compilation of a first operator; and
a communication module, configured to send the first executable file to a second device, wherein
the processing module is further configured to obtain a model file, wherein the model file is a binary file obtained through compilation of an AI model, and the model file comprises execution logic of the first executable file; and
the communication module is further configured to send the model file to the second device.

15. The apparatus according to claim 14, wherein
the communication module is further configured to receive a user instruction, wherein the user instruction indicates to put the first executable file into the model file; and
the processing module is specifically configured to put the first executable file into the model file in response to the user instruction.

16. The apparatus according to claim 14 or 15, wherein
the communication module is further configured to receive a second operator input by a user;
the processing module is further configured to obtain a second executable file, wherein the second executable file is a binary file obtained through compilation of the second operator; and
the processing module is specifically configured to put the second executable file into the model file.

17. The apparatus according to any one of claims 14 to 16, wherein
the communication module is further configured to receive first request information from the second device, wherein the first request information is used for requesting the first executable file.

18. The apparatus according to any one of claims 14 to 17, wherein
the communication module is further configured to receive a service instruction from the second device, wherein the service instruction indicates a service parameter of the first operator; and
the processing module is further configured to update the first executable file based on the service parameter of the first operator.

19. The apparatus according to any one of claims 14 to 18, wherein
the communication module is further configured to receive second request information from the second device, wherein the second request information is used for requesting an updated first executable file; and
the communication module is further configured to send the updated first executable file to the second device.

20. The apparatus according to any one of claims 14 to 18, wherein
the processing module is further configured to periodically update the first executable file; and
the communication module is further configured to send an updated first executable file to the second device.

21. An operator compilation apparatus, wherein the operator compilation apparatus is used in a second device and comprises:
a communication module, configured to receive a first executable file from a first device, wherein the first executable file is a binary file obtained through compilation of a first operator, and
the communication module is further configured to receive a model file from the first device, wherein the model file is a binary file obtained through compilation of an AI model.

22. The apparatus according to claim 21, further comprising a processing module, wherein
the processing module is configured to parse the model file to obtain execution logic of the first executable file; and
the processing module is further configured to execute the first executable file based on the execution logic of the first executable file.

23. The apparatus according to claim 21 or 22, further comprising a storage module, wherein
the communication module is further configured to:
when the storage module does not store the first executable file, send first request information to the first device, wherein the first request information is used for requesting the first executable file.

24. The apparatus according to any one of claims 21 to 23, wherein the communication module is further configured to:
send a service instruction to the first device, wherein the service instruction indicates a service parameter of the first operator, and the service parameter of the first operator is used for updating the first executable file.

25. The apparatus according to any one of claims 21 to 24, wherein
the communication module is further configured to send second request information to the first device, wherein the second request information is used for requesting an updated first executable file; and
the communication module is further configured to receive the updated first executable file from the second device.

26. The apparatus according to any one of claims 21 to 24, wherein
the communication module is further configured to periodically receive an updated first executable file from the first device.

27. A computing apparatus, wherein the computing apparatus comprises a processor and a memory, the memory is configured to store program code, and the processor is configured to invoke the program code to perform the method according to any one of claims 1 to 7 or the method according to any one of claims 8 to 13.

28. A computing system, comprising a first device configured to perform the method according to any one of claims 1 to 7 and a second device configured to perform the method according to any one of claims 8 to 13.
